# EUROPEAN PATENT SPECIFICATION

(11) **EP 4 361 984 B1**
(45) Date of publication and mention of the grant of the patent: **11.03.2026**
(21) Application number: 23743517.7
(22) Date of filing: 19.01.2023
(51) Int. Cl.: G08B 17/10, A62C 3/16, A62C 37/38, H01M 10/48, H01M 10/627, H01M 50/24, H01M 50/581, H01M 50/375, H01M 50/383, A62C 37/36

(54) **FIRE MONITORING APPARATUS AND METHOD**
BRANDÜBERWACHUNGSAPPARAT UND -VERFAHREN
APPAREIL ET PROCÉDÉ DE SURVEILLANCE D'INCENDIE

(30) Priority: 19.01.2022 KR 20220008139
(43) Date of publication of application: 01.05.2024
(60) Divisional application: 26151813.8
(73) Proprietor: LG Energy Solution, Ltd., Seoul 07335 (KR)
(72) Inventor: LEE, Hyun-Min, Daejeon 34122 (KR); KIM, Yo-Hwan, Daejeon 34122 (KR); LEE, Kyung-Min, Daejeon 34122 (KR); LEE, Ji-Won, Daejeon 34122 (KR); PARK, Jong-Min, Daejeon 34122 (KR); LEE, Jong-Soo, Daejeon 34122 (KR)
(74) Representative: Plasseraud IP
(86) International application number: PCT/KR2023/000989
(87) International publication number: WO 2023/140673

(56) References cited:
- WO-A1-2021/162538
- WO-A1-2021/167270
- CN-A- 110 634 262
- JP-A- 2019 079 445
- JP-A- H08 124 071
- KR-A- 20180 032 122
- KR-A- 20210 104 492
- KR-B1- 102 251 413

## Description

### TECHNICAL FIELD

The present disclosure relates to a fire monitoring apparatus and method, and more particularly, to a fire monitoring apparatus and method capable of monitoring whether or not a fire occurs in a battery and taking related measures when a fire occurs.

### BACKGROUND ART

Recently, the demand for portable electronic products such as notebook computers, video cameras and portable telephones has increased sharply, and electric vehicles, energy storage batteries, robots, satellites and the like have been developed in earnest. Accordingly, high-performance batteries allowing repeated charging and discharging are being actively studied.

Batteries commercially available at present include nickel-cadmium batteries, nickel hydrogen batteries, nickel-zinc batteries, lithium batteries and the like. Among them, the lithium batteries are in the limelight since they have almost no memory effect compared to nickel-based batteries and also have very low self-discharging rate and high energy density.

On the other hand, since these batteries have a disadvantage of being vulnerable to external surges and high temperatures, an energy storage system (ESS) that intensively stores batteries has a problem in that the risk of fire always exists.

In general, a fire in an energy storage system starts ignition in an individual battery cell unit, and then the fire may develop in a battery rack unit. In this case, since the fire generated in a battery cell unit may spread to the entire energy storage system, it is necessary to monitor whether a fire occurs and take a corresponding measure promptly in the early stage of a fire.

Document CN 110 634 262 discloses a fire early warning method for a battery prefabricated cabin of an energy storage power station of the related art.

### DISCLOSURE

### Technical Problem

The present disclosure is designed to solve the problems of the related art, and therefore the present disclosure is directed to providing a fire monitoring apparatus and method capable of monitoring a fire inside an energy storage system and extinguishing the fire at an early stage.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

A fire monitoring apparatus according to one aspect of the present invention is defined in appended claim 1.

A fire monitoring system according to another aspect of the present invention is defined in appended claim 6 and a method according to still another aspect of the present invention is defined in claim 7.

### Advantageous Effects

According to the present invention, there is an advantage in that a fire occurrence level is determined based on smoke generated inside the energy storage system, and an appropriate fire suppression measure can be performed according to the determined fire occurrence level. Therefore, even if a fire occurs inside the energy storage system, the fire can be extinguished at an early stage.

In addition, according to one aspect of the present disclosure, a fire suppression measure may be performed based on the concentration of gas included in the energy storage system. Therefore, an accident such as an explosion of the energy storage system can be prevented in advance.

The effects of the present disclosure are not limited to the above, and other effects not mentioned herein will be clearly understood by those skilled in the art from the appended claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing a fire monitoring apparatus according to an embodiment of the present disclosure.
FIG. 2 is a diagram schematically showing a fire monitoring system according to another embodiment of the present disclosure.
FIG. 3 is a diagram schematically showing a fire monitoring method according to still another embodiment of the present disclosure.
FIG. 4 is a diagram showing the fire monitoring method of FIG. 3 in more detail.
FIG. 5 is a diagram schematically showing a fire monitoring method according to still another embodiment of the present disclosure.

### BEST MODE

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the appended claims.

Additionally, in describing the present disclosure, when it is deemed that a detailed description of relevant known elements or functions renders the key subject matter of the present disclosure ambiguous, the detailed description is omitted herein.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

Hereinafter, a preferred embodiment of the present disclosure will be described in detail with reference to the accompanying drawings.

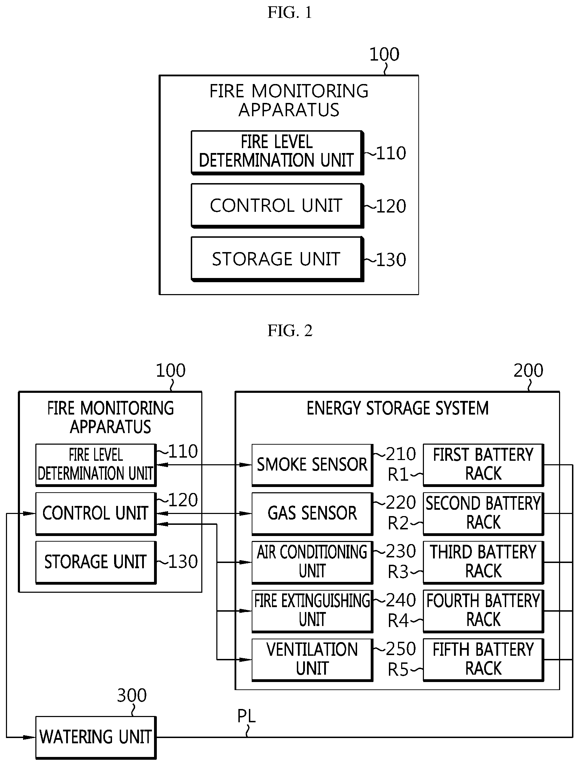

FIG. 1 is a diagram schematically showing a fire monitoring apparatus 100 according to an embodiment of the present disclosure. FIG. 2 is a diagram schematically showing a fire monitoring system according to another embodiment of the present disclosure.

A fire monitoring apparatus 100 according to an embodiment of the present invention is a device for monitoring a fire in an energy storage system 200 equipped with a plurality of battery modules.

First, referring to FIG. 2, a fire monitoring system includes a fire monitoring apparatus 100, an energy storage system 200, and a watering unit 300. In the non-limiting embodiment of FIG. 2, a watering unit 300 is shown outside the fire monitoring apparatus 100 and the energy storage system 200, but it should be noted that the watering unit 300 may be provided inside the energy storage system 200.

The energy storage system 200 includes a plurality of battery racks R1 to R5, a smoke sensor 210, a gas sensor 220, an air conditioning unit 230, a fire extinguishing unit 240, and a ventilation unit 250.

The plurality of battery racks R1 to R5 may be a cell assembly included in the energy storage system 200.

For example, the battery rack may be formed in a frame structure in which battery modules can be seated. Each battery rack may include a plurality of battery modules. Also, each battery module may include a plurality of battery cells.

Here, the battery cell refers to a physically separable independent cell having a negative electrode terminal and a positive electrode terminal. As an example, a lithium-ion battery or a lithium polymer battery may be considered a battery cell. In the non-limiting embodiment of FIG. 2, an embodiment in which five battery racks R1 to R5 are provided in the energy storage system 200 is shown, but it should be noted that the number of battery racks that can be included in the energy storage system 200 is not limited.

The smoke sensor 210 is a sensor capable of detecting smoke generated inside the energy storage system 200. According to the invention, a plurality of smoke sensors 210 are provided inside the energy storage system 200.

The gas sensor 220 is a sensor capable of detecting gas generated inside the energy storage system 200. For example, the gas sensor 220 may detect H₂.

The air conditioning unit 230 may be provided inside the energy storage system 200. Also, the air conditioning unit 230 may be configured to circulate the internal air of the energy storage system 200. That is, the air conditioning unit 230 may lower the temperature of the internal air through heat exchange between the internal air of the energy storage system 200 and the external air, and circulate the internal air having a lowered temperature. For example, a HVAC (Heating, Ventilation and Air Conditioning) may be applied to the air conditioning unit 230.

The fire extinguishing unit 240 may be provided inside the energy storage system 200. Also, when the fire extinguishing unit 240 is operated, the fire extinguishing agent stored in the fire extinguishing unit 240 may be sprayed into the energy storage system 200. For example, NOVEC 1230 may be applied to the fire extinguishing unit 240.

The ventilation unit 250 is provided in the energy storage system 200. When the ventilation unit 250 is operated, an external air is introduced into the energy storage system 200. That is, the ventilation unit 250 is configured to ventilate the energy storage system 200. For example, an active ventilation system (AVS) may be applied to the ventilation unit 250.

The watering unit 300 is configured to store the fire extinguishing fluid. In addition, the watering unit 300 is configured to be connected to each battery module included in the energy storage system 200 through a pipeline PL equipped with a bulb that can be destroyed depending on the temperature of the corresponding battery module. For example, the pipeline PL may be respectively connected to a plurality of battery modules included in each battery rack.

In addition, a bulb may be provided at the end of the pipeline PL connected to the battery module. The bulb is destroyed if the temperature of the corresponding battery module rises to a certain temperature or above. That is, when the watering unit 300 is operated and the fire extinguishing fluid is introduced into the pipeline PL, the fire extinguishing fluid is ejected into the corresponding battery module through the pipeline PL where the bulb is destroyed. In other words, the fire extinguishing fluid is introduced into the pipeline PL by the watering unit 300, and is introduced into the battery module in which the bulb of the corresponding pipeline PL is destroyed among the plurality of battery modules. For example, a fire extinguishing fluid may be applied without limitation as long as it is for extinguishing a fire generated in a battery module. In one embodiment, the fire extinguishing fluid may be water.

Referring to FIG. 1, the fire monitoring apparatus 100 includes a fire level determination unit 110 and a control unit 120.

The fire level determination unit 110 is configured to receive a smoke detection signal from the plurality of smoke sensors 210 provided inside the energy storage system 200.

Specifically, the fire level determination unit 110 is connected to the smoke sensors 210 provided inside the energy storage system 200 through wired and/or wireless communication. The fire level determination unit 110 is connected to each of the plurality of smoke sensors 210 and receives a smoke detection signal from each smoke sensor 210.

The fire level determination unit 110 is configured to determine a fire level according to the number of smoke sensors 210 that detect smoke.

Specifically, when smoke is detected in only one of the plurality of smoke sensors 210, the fire level determination unit 110 is configured to determine the fire level as a first level. Conversely, when smoke is detected in several smoke sensors among the plurality of smoke sensors 210, the fire level determination unit 110 is configured to determine the fire level as a second level.

For example, the fire level determination unit 110 receives a smoke detection signal from the smoke sensor 210 that detects smoke generated inside the energy storage system 200. Since the fire level determination unit 110 is connected to each of the plurality of smoke sensors 210, it is possible to determine the number of smoke detection signals received from each smoke sensor 210. Accordingly, the fire level determination unit 110 determines the fire level as a first level or a second level according to the number of received smoke detection signals.

The control unit 120 is configured to control the operation of at least one of the air conditioning unit 230, the fire extinguishing unit 240, the watering unit 300, and the ventilation unit 250 for the energy storage system 200 as a fire suppression measure corresponding to the determined fire level.

Specifically, the control unit 120 performs a fire suppression measure corresponding to the determined fire level. That is, the fire suppression measure performed when the fire level is the first level and the fire suppression measure performed when the fire level is the second level may be partially different.

Different fire suppression measures according to the fire level are derived from the number of smoke sensors 210 that detect smoke. When the fire extinguishing agent is injected or the fire extinguishing fluid is introduced into the battery module, the corresponding battery module and/or the battery module provided in the energy storage system 200 may not be reusable. Therefore, it is desirable that the fire suppression measure is performed after accurately determining whether a fire has actually occurred in the energy storage system 200.

For example, in general, the energy storage system 200 is sealed from the outside, and the internal air is circulated by the air conditioning unit 230. In this case, if smoke is detected by only one smoke sensor 210, the possibility of a sensing error in the smoke sensor 210 detecting smoke may be greater than the possibility that smoke is generated due to a fire. Conversely, if smoke is detected by a plurality of smoke sensors 210, the possibility that smoke is generated due to a fire may be greater than the possibility that the plurality of smoke sensors 210 have sensing errors. Accordingly, the control unit 120 is configured to perform a fire suppression measure according to the fire level determined based on the number of smoke sensors 210 that detect smoke.

Therefore, the fire monitoring apparatus 100 according to an embodiment of the present disclosure monitors whether a fire occurs in the energy storage system 200 in consideration of the possibility of a sensing error of the smoke sensor 210, and take an appropriate fire suppression measure to correspond to the monitoring result. For example, in the case of a sensing error of the smoke sensor 210, there is an advantage in that the energy storage system 200 can be protected by performing only a minimal measure. Conversely, in the case where a fire occurs, there is an advantage in that a fire suppression measure is performed early and the fire can be quickly extinguished.

Meanwhile, the control unit 120 included in the fire monitoring apparatus 100 may optionally include an application-specific integrated circuit (ASIC), another chipset, a logic circuit, a register, a communication modem, and a data processing device, and the like, known in the art to execute various control logics disclosed below. Also, when the control logic is implemented as software, the control unit 120 may be implemented as a set of program modules. At this time, the program modules may be stored in a memory and executed by the control unit 120. The memory may be internal or external to the control unit 120 and may be connected to the control unit 120 by various well-known means.

In addition, the fire monitoring apparatus 100 may further include a storage unit 130. The storage unit 130 may store data necessary for operation and function of each component of the fire monitoring apparatus 100, data generated in the process of performing the operation or function, or the like. The storage unit 130 is not particularly limited in its kind as long as it is a known information storage means that can record, erase, update and read data. As an example, the information storage means may include RAM, flash memory, ROM, EEPROM, registers, and the like. In addition, the storage unit 130 may store program codes in which processes executable by the control unit 120 are defined.

Hereinafter, a fire suppression measure according to the determined fire level will be described in detail.

When the fire level is determined as the first level or the second level, the control unit 120 may be configured to stop the operation of the air conditioning unit 230 provided inside the energy storage system 200.

Specifically, the control unit 120 may be connected to the air conditioning unit 230 provided in the energy storage system 200. Also, the control unit 120 may control the operation of the air conditioning unit 230.

In general, in a normal situation where a fire does not occur in the energy storage system 200, the air conditioning unit 230 is always operated to circulate air inside the energy storage system 200.

However, when the fire level is determined as the first level or the second level, that is, when smoke is detected by one or more smoke sensors 210, smoke or fire can easily spread inside the energy storage system 200 if the air conditioning unit 230 continues to operate.

If the fire level is the first level, there is a possibility of a sensing error of the smoke sensor 210, but the case where smoke is actually detected by only one smoke sensor 210 cannot be ruled out. If smoke is actually detected by one smoke sensor 210, there is a risk that smoke and/or fire may spread to the energy storage system 200 as the air conditioning unit 230 continues to operate. Accordingly, the control unit 120 may be configured to stop operating the air conditioning unit 230 even when the fire level is the first level.

In addition, when the fire level is the second level, since it is very likely that smoke is generated inside the energy storage system 200, the control unit 120 may be configured to stop the operation of the air conditioning unit 230.

Accordingly, the control unit 120 may stop the circulation of the internal air of the energy storage system 200 by stopping the operation of the air conditioning unit 230 when the fire level is determined as the first level or the second level.

Also, when the fire level is determined as the second level, the control unit 120 may be configured to operate the fire extinguishing unit 240 provided inside the energy storage system 200. Here, when the fire extinguishing unit 240 is operated by the control unit 120, a fire extinguishing agent included in the fire extinguishing unit 240 may be injected into the energy storage system 200.

Specifically, the control unit 120 may be connected to the fire extinguishing unit 240 provided inside the energy storage system 200. In addition, the operation of the fire extinguishing unit 240 may be controlled by the control unit 120.

For example, when the fire level is determined as the second level, the control unit 120 may first stop the operation of the air conditioning unit 230 to prevent the smoke and/or fire from circulating within the energy storage system 200. In addition, the control unit 120 may inject a fire extinguishing agent into the energy storage system 200 by operating the fire extinguishing unit 240.

Fires that can occur in the energy storage system 200 can be classified into electrical fires and battery fires.

The electrical fire refers to a fire that may be caused by an electrical cause, such as an overcurrent flowing in the energy storage system 200.

The battery fire refers to a fire that can be caused by internal problems of the battery cell, such as contact between a positive electrode active material and a negative electrode active material due to lithium plating (internal short circuit) and venting of the battery cell due to swelling.

In order to extinguish an electrical fire, it is required to inject a fire extinguishing agent, and in order to extinguish a battery fire, is required to inject water into the battery module. However, it is not possible to accurately distinguish an electrical fire and a battery fire only with the detected smoke.

Accordingly, when the fire level is determined as the second level, the control unit 120 may first operate the fire extinguishing unit 240 to inject a fire extinguishing agent into the energy storage system 200 in order to extinguish the electrical fire.

In addition, when the fire level is determined as the second level, the control unit 120 is configured to operate the watering unit 300 to introduce the fire extinguishing fluid provided in the watering unit 300 into the pipeline PL.

Specifically, the control unit 120 is connected to the watering unit 300 to control operation of the watering unit 300.

When the fire level is determined as the second level, the control unit 120 operates the fire extinguishing unit 240 to inject the fire extinguishing agent into the energy storage system 200, and operate the watering unit 300 to introduce the fire extinguishing fluid into the pipeline PL.

For example, if the fire occurring in the energy storage system 200 is an electrical fire, the temperature of a battery module included in the battery rack may not rise. Therefore, although the fire extinguishing fluid is introduced into the pipeline PL, since the bulb provided in the pipeline PL is not destroyed, the fire extinguishing fluid may not be introduced into the battery module. On the other hand, the electrical fire can be extinguished by injecting the fire extinguishing agent.

As another example, if the fire occurring in the energy storage system 200 is a battery fire, the temperature of the battery module in which the fire has occurred may rise rapidly. In this case, the bulb corresponding to the corresponding battery module is destroyed, and the fire extinguishing fluid is introduced into the corresponding battery module through the pipeline PL. Thus, the battery fire can be extinguished by the fire extinguishing fluid.

In this way, when the determined fire level is the second level, the control unit 120 may control the operation of the fire extinguishing unit 240 and the watering unit 300 to extinguish both the electrical fire and the battery fire. Accordingly, fires that may be caused by different causes can be effectively extinguished.

The control unit 120 is configured to determine the water level of the fire extinguishing fluid provided in the watering unit 300.

Specifically, the control unit 120 operates the watering unit 300 to introduce the fire extinguishing fluid into the pipeline PL, and then determine the water level of the fire extinguishing fluid stored in the watering unit 300.

For example, the watering unit 300 may include a water level sensor that measures the water level of the fire extinguishing fluid. The water level sensor is communicatively connected to the control unit 120 and may transmit information about the measured water level to the control unit 120 for each preset period. Also, the control unit 120 may determine the water level of the fire extinguishing fluid based on the water level information received from the water level sensor.

The control unit 120 is configured to ventilate the energy storage system 200 with an external air by operating the ventilation unit 250 when the determined water level is equal to or lower than a preset critical water level.

Specifically, when the water level of the fire extinguishing fluid is equal to or lower than the critical water level, this may be a case where the fire extinguishing fluid included in the watering unit 300 is introduced into at least one battery module. As described above, even if the fire extinguishing fluid is introduced into the pipeline PL, the fire extinguishing fluid cannot be introduced into the battery module unless the bulb is destroyed. Therefore, when the water level of the fire extinguishing fluid is lowered to the critical water level or less, this means that at least one of the plurality of bulbs included in the pipeline PL is destroyed, and this may indicate that the fire extinguishing fluid is introduced into at least one battery module.

When the fire extinguishing fluid is introduced directly into the battery module to extinguish the battery fire, the inside of the energy storage system 200 may contain a large amount of fire extinguishing agent (injected by operating the fire extinguishing unit 240), water vapor, and H₂. Accordingly, the control unit 120 may prevent the energy storage system 200 from exploding by operating the ventilation unit 250 to ventilate the energy storage system 200.

The fire monitoring apparatus 100 according to an embodiment of the present disclosure has an advantage of performing an appropriate fire suppression measure for each case in consideration of various conditions in situations where electrical fires, battery fires, and explosions may occur. Therefore, even if a fire occurs in the energy storage system 200, the fire can be extinguished at an early stage, and a larger accident can be prevented from occurring.

Meanwhile, the control unit 120 may be configured to judge that a battery fire has occurred in the energy storage system 200 when the determined water level is less than or equal to a preset critical water level. Conversely, the control unit 120 may be configured to determine that an electrical fire has occurred in the energy storage system 200 when the determined water level exceeds the critical water level.

Specifically, when the determined fire level is the second level, this may be a case where a fire occurs inside the energy storage system 200. However, it is not easy to distinguish whether the cause of a fire is an electrical fire or a battery fire only with the smoke detection signal of the smoke sensor 210.

As described above, in the case of a battery fire, since the temperature of the battery module rises rapidly, the corresponding bulb may be destroyed and the fire extinguishing fluid introduced into the pipeline may be introduced into the battery module. Therefore, in the case of a battery fire, the water level of the fire extinguishing fluid included in the watering unit 300 may be lowered to the critical water level or below.

On the other hand, in the case of an electrical fire, since the bulb is not destroyed, even if smoke is detected, the water level of the fire extinguishing fluid is not lowered to the critical water level or below.

That is, after the control unit 120 operates the fire extinguishing unit 240 and the watering unit 300, the cause of the fire can be classified into an electrical fire or a battery fire according to the result of comparing the water level of the fire extinguishing fluid with the preset critical water level.

Accordingly, the fire monitoring apparatus 100 according to an embodiment of the present disclosure can not only extinguish a fire occurring in the energy storage system 200 at an early stage, but also analyze the cause of the fire in detail. In addition, the fire monitoring apparatus 100 has an advantage of providing information necessary for fire cause analysis by notifying the user or the outside of a specific fire cause.

The control unit 120 may be configured to receive the measured gas concentration from the gas sensor 220 provided in the energy storage system 200.

Specifically, the control unit 120 may be communicatively connected to the gas sensor 220 provided in the energy storage system 200. Also, the control unit 120 may receive information about gas concentration measured by the gas sensor 220.

For example, the gas measured by the gas sensor 220 may be a combustible gas or an explosive gas. More specifically, the gas measured by the gas sensor 220 may be H₂. That is, the gas sensor 220 may be configured to measure the concentration of H₂.

The control unit 120 may be configured to stop the operation of the air conditioning unit 230 provided inside the energy storage system 200 when the measured gas concentration is equal to or greater than a preset critical concentration.

For example, since there is a risk of explosion of the energy storage system 200 when the concentration of the gas exceeds the critical concentration, the control unit 120 may stop the operation of the air conditioning unit 230 for circulating an internal air of the energy storage system 200.

Also, the control unit 120 may be configured to operate the ventilation unit 250 to ventilate the energy storage system 200 with an external air. That is, the control unit 120 may operate the ventilation unit 250 to discharge the gas contained in the sealed inside of the energy storage system 200 to the outside. Accordingly, as the concentration of the gas included in the energy storage system 200 gradually decreases, the risk of explosion of the energy storage system 200 may be reduced.

The fire monitoring apparatus 100 according to an embodiment of the present disclosure may perform a fire suppression measure in consideration of the concentration of gas included in the energy storage system 200 as well as the smoke generated inside the energy storage system 200.

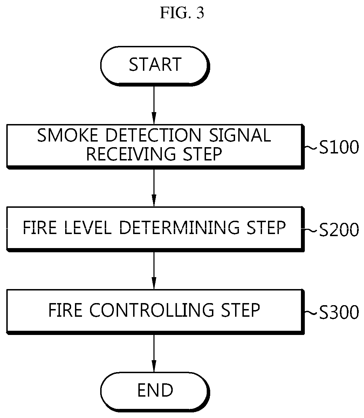

FIG. 3 is a diagram schematically showing a fire monitoring method according to still another embodiment of the present disclosure. Each step of the fire monitoring method are performed by the fire monitoring apparatus 100. Hereinafter, for convenience of explanation, the content overlapping with the previously described content will be omitted or briefly described.

The fire monitoring method is a method for monitoring a fire in the energy storage system 200 equipped with a plurality of battery modules.

Referring to FIG. 3, the fire monitoring method includes a smoke detection signal receiving step (S100), a fire level determining step (S200), and a fire controlling step (S300).

The smoke detection signal receiving step (S100) is a step of receiving a smoke detection signal from the plurality of smoke sensors 210 provided inside the energy storage system 200, and is performed by the fire level determination unit 110. According to the invention, the fire level determination unit 110 is connected to a plurality of smoke sensors 210 and receives a smoke detection signal from each smoke sensor 210.

The fire level determining step (S200) is a step of determining a fire level according to the number of smoke sensors 210 that detects smoke when smoke is detected, and is performed by the fire level determination unit 110.

When receiving a smoke detection signal from one smoke sensor 210, the fire level determination unit 110 determines the fire level as the first level. The fire level determination unit 110 determines the fire level as the second level when receiving a smoke detection signal from the plurality of smoke sensors 210. If the fire level determination unit 110 does not receive the smoke detection signal, the fire level may be determined as the zero level or NULL.

The fire controlling step (S300) is a step of controlling the operation of at least one of the air conditioning unit 230, the fire extinguishing unit 240, the watering unit 300, and the ventilation unit 250 for the energy storage system 200 as a fire suppression measure corresponding to the determined fire level, and may be performed by the control unit 120.

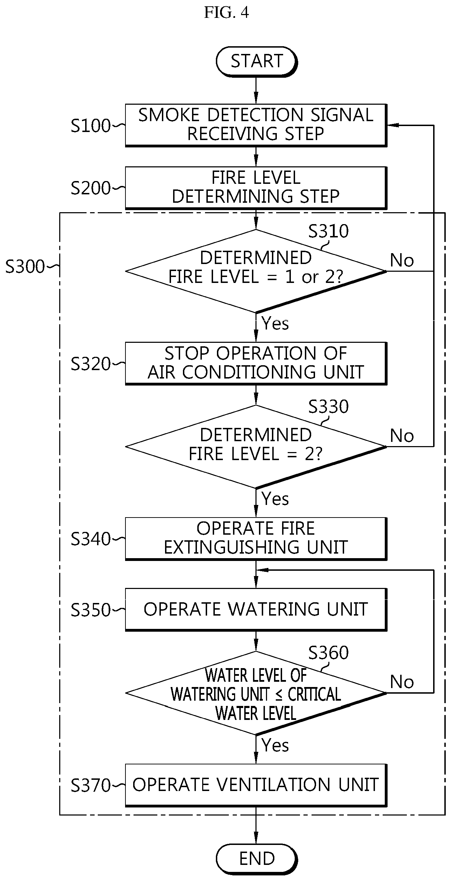

The fire controlling step (S300) will be described in detail with reference to FIG. 4.

FIG. 4 is a diagram showing the fire monitoring method of FIG. 3 in more detail.

Referring to FIG. 4, the fire controlling step (S300) may include steps S310 to S370.

In the step S310, it is judged whether the fire level determined in the fire level determining step (S200) is the first level or the second level. If the determined fire level is the first level or the second level, the step S320 may be performed, and otherwise, the smoke detection signal receiving step (S100) may be performed.

In the step S320, the control unit 120 may stop the operation of the air conditioning unit 230 provided in the energy storage system 200. Accordingly, the circulation of the internal air of the energy storage system 200 may be stopped.

In the step S330, it may be judged whether the fire level determined in the fire level determining step (S200) is the second level. If the determined fire level is the second level, the step S330 may be performed, and otherwise, the smoke detection signal receiving step (S100) may be performed.

In the step S340, the control unit 120 may operate the fire extinguishing unit 240. Specifically, the control unit 120 may operate the fire extinguishing unit 240 to extinguish an electrical fire that may occur at the second fire level. In this case, the fire extinguishing agent stored in the fire extinguishing unit 240 may be injected into the energy storage system 200.

In the step S350, the control unit 120 operates the watering unit 300.
Specifically, the control unit 120 operates the watering unit 300 to extinguish a battery fire that may occur at the second fire level. In this case, the fire extinguishing fluid stored in the watering unit 300 is introduced into the pipeline PL.

In the step S360, it is judged whether the water level of the watering unit 300 (the water level of the fire extinguishing fluid included in the watering unit 300) is equal to or less than the critical water level. If the water level of the watering unit 300 is equal to or less than the critical water level, the step S370 is performed, and otherwise, the step S350 may be performed.

Here, if the water level of the watering unit 300 is equal to or lower than the critical water level, this means that at least one of the plurality of bulbs included in the pipeline PL is destroyed. Also, since the fire extinguishing fluid is introduced into the battery module through the destroyed bulb, this means that the water level of the watering unit 300 is lowered to the critical water level or below.

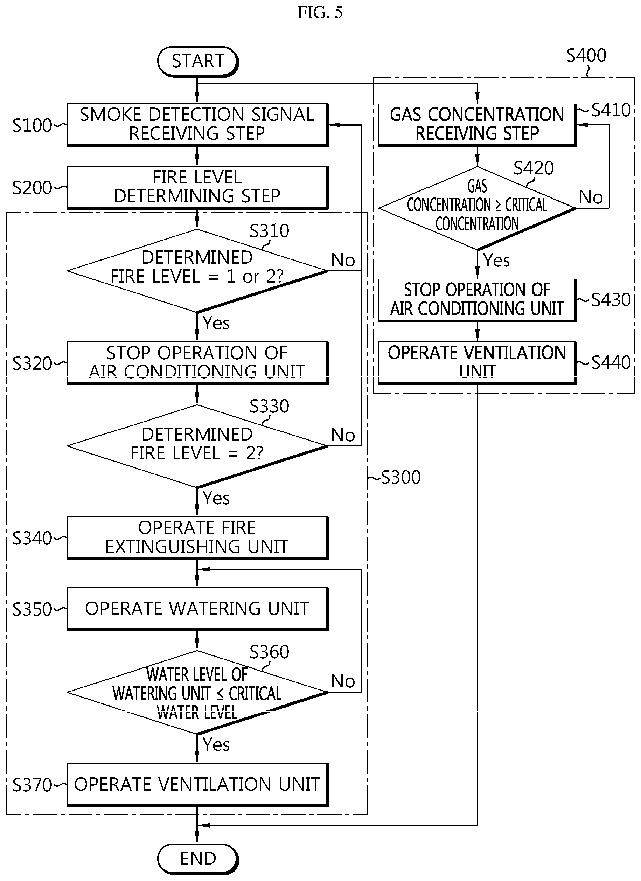

On the other hand, if the water level of the watering unit 300 is not lowered to the critical water level or below even though a predetermined time has elapsed after the step S350 is performed, this means that all of the plurality of bulbs provided in the pipeline PL are not destroyed. In this case, the smoke detected by the plurality of smoke sensors 110 is smoke caused by an electrical fire, and the electrical fire may be extinguished by operating the fire extinguishing unit 240 in the step S340. Therefore, since the bulb is not destroyed, the water level of the watering unit 300 may not be lowered to the critical water level or below. Although not shown in FIGS. 4 and 5, the control unit 120 may perform the starting step again if the water level of the watering unit 300 is not lowered to the critical water level or below until a predetermined time elapses after the step S350 is first performed.

In the step S370, the control unit 120 operates the ventilation unit 250.
Specifically, when the battery fire is extinguished by introducing the fire extinguishing fluid into the battery module, the control unit 120 may operate the ventilation unit 250 to process the fire extinguishing agent, water vapor, and H₂ included in the energy storage system 200. In this case, an external air is introduced into the energy storage system 200 and the energy storage system 200 is ventilated. Therefore, since gases contained in the energy storage system 200 can escape, the possibility of explosion of the energy storage system 200 can be reduced.

The fire monitoring method according to an embodiment of the present disclosure may appropriately control the air conditioning unit 230, the fire extinguishing unit 240, the watering unit 300, and the ventilation unit 250 based on the number of sensors that detect smoke, and perform a fire suppression measure. Therefore, the fire monitoring method has an advantage of distinguishing the case where the smoke sensor 210 malfunctions and taking an appropriate fire suppression measure to correspond to the type of fire (electrical fire or battery fire) even if a fire occurs.

FIG. 5 is a diagram schematically showing a fire monitoring method according to still another embodiment of the present disclosure.

Referring to FIG. 5, the fire monitoring method may further include a ventilation controlling step (S400).

The ventilation controlling step (S400) is a step that can be performed in parallel with the smoke detection signal receiving step (S100).

The ventilation controlling step (S400) is a step of receiving the measured gas concentration from the gas sensor 220 provided in the energy storage system 200, and controlling the operation of the air conditioning unit 230 and the ventilation unit 250 according to the result of comparing the measured gas concentration with a preset critical concentration, and may be performed by the control unit 120.

Specifically, in the step S410, the control unit 120 may receive information on gas concentration from the gas sensor 220 provided in the energy storage system 200.

In the step S420, it may be judged whether the gas concentration is equal to or greater than the preset critical concentration. If the gas concentration is equal to or greater than the preset critical concentration, the step S430 may be performed, and otherwise, the step S410 may be performed.

In the step S430, the control unit 120 may stop the operation of the air conditioning unit 230 provided in the energy storage system 200. Accordingly, the circulation of the internal air of the energy storage system 200 may be stopped.

In the step S440, the control unit 120 may operate the ventilation unit 250. Specifically, the control unit 120 may operate the ventilation unit 250 to prevent an explosion of the energy storage system 200 when a gas concentration equal to or greater than the critical concentration is included inside the energy storage system 200.

For example, the gas whose concentration is measured by the gas sensor 220 may be a combustible gas or an explosive gas. More specifically, the gas may be H₂.

If H₂ equal to or greater than the critical concentration is distributed in the closed energy storage system 200, an explosion may occur when H₂ comes in contact with sparks or the like. Accordingly, the control unit 120 can significantly reduce the possibility of explosion of the energy storage system 200 by operating the ventilation unit 250 to discharge the gas to the outside of the energy storage system 200 when the gas concentration is equal to or greater than the critical concentration.

The embodiments of the present disclosure described above may not be implemented only through an apparatus and method, but may be implemented through a program that realizes a function corresponding to the configuration of the embodiments of the present disclosure or a recording medium on which the program is recorded. The program or recording medium may be easily implemented by those skilled in the art from the above description of the embodiments.

The present disclosure has been described in detail. However, it should be understood that the detailed description and specific examples, while indicating preferred embodiments of the disclosure, are given by way of illustration only, since various changes and modifications within the scope of the appended claims will become apparent to those skilled in the art from this detailed description.

In addition, since the present disclosure described above can be substituted, modified and changed in various ways by those skilled in the art without departing from the technical idea of the present disclosure, the present disclosure is not limited by the embodiments described above and the accompanying drawings, and all or some of the embodiments may be selectively combined to enable various modifications without departing from the scope of the appended claims.

### (Explanation of reference signs)

100: fire monitoring apparatus
110: fire level determination unit
120: control unit
130: storage unit
200: energy storage system
210: smoke sensor
220: gas sensor
230: air conditioning unit
240: fire extinguishing unit
250: ventilation unit
300: watering unit

## Claims

1. A fire monitoring apparatus (100) for monitoring a fire in an energy storage system (200) equipped with a plurality of battery modules, a plurality of smoke sensors (210), an air conditioning unit (230), a fire extinguishing unit (240), a watering unit (300) and a ventilation unit (250), the fire monitoring apparatus comprising:
a fire level determination unit (110) configured to receive a smoke detection signal from the smoke sensors (210) provided inside the energy storage system (200) and determine a fire level according to the number of smoke sensors (210) that detect the smoke; and
a control unit (120) configured to control an operation of at least one of the air conditioning unit (230), the fire extinguishing unit (240), the watering unit (300) and the ventilation unit (250) for the energy storage system (200) as a fire suppression measure corresponding to the determined fire level;
wherein the fire level determination unit (110) is configured to:
determine the fire level as a first level when the smoke is detected in only one of the plurality of smoke sensors (210), and
determine the fire level as a second level when the smoke is detected in several smoke sensors (210) among the plurality of smoke sensors (210);
wherein the control unit (120) is configured to introduce a fire extinguishing fluid provided in the watering unit (300) into a pipeline (PL), which is arranged to connect the watering unit (300) to each battery module included in the energy storage system (200) and is equipped with a bulb that is capable of being destroyed according to a temperature of the corresponding battery module, by operating the watering unit (300), when the fire level is determined as the second level; and
**characterized in that** the control unit (120) is configured to determine a water level of the fire extinguishing fluid provided in the watering unit (300) and operate the ventilation unit (250) to ventilate the energy storage system (200) with an external air when the determined water level is equal to or lower than a preset critical water level.

2. The fire monitoring apparatus (100) according to claim 1,
wherein the control unit (120) is configured to stop the operation of the air conditioning unit (230) provided inside the energy storage system (200) when the fire level is determined as the first level or the second level.

3. The fire monitoring apparatus (100) according to claim 1,
wherein when the fire level is determined as the second level, the control unit (120) is configured to operate the fire extinguishing unit (240) provided inside the energy storage system (200), so that a fire extinguishing agent contained inside the fire extinguishing unit (240) is injected into the energy storage system (200).

4. The fire monitoring apparatus according to claim 1,
wherein the control unit (120) is configured to introduce the fire extinguishing fluid into the pipeline (PL) by the watering unit (300) and to introduce into a battery module at which the bulb of the corresponding pipeline (PL) is destroyed among the plurality of battery modules.

5. The fire monitoring apparatus according to claim 1,
wherein the control unit (120) is configured to receive a measured gas concentration from a gas sensor (220) provided in the energy storage system (200), stop the operation of the air conditioning unit (230) provided inside the energy storage system (200) when the measured gas concentration is equal to or greater than a preset critical concentration, and operate the ventilation unit (250) to ventilate the energy storage system (200) with an external air.

6. A fire monitoring system, comprising the fire monitoring apparatus according to any one of claims 1 to 5, and an energy storage system (200).

7. A fire monitoring method for monitoring a fire in an energy storage system (200) equipped with a plurality of battery modules, a plurality of smoke sensors (210), an air conditioning unit (230), a fire extinguishing unit (240), a watering unit (300) and a ventilation unit (250), the fire monitoring method comprising:
a smoke detection signal receiving step (S100) of receiving a smoke detection signal from the smoke sensors (210) provided inside the energy storage system (200);
a fire level determining step (S200) of determining a fire level according to the number of smoke sensors (210) that detect the smoke, when the smoke is detected; and
a fire controlling step (S300) of controlling an operation of at least one of the air conditioning unit (230), the fire extinguishing unit (240), the watering unit (300) and the ventilation unit (250) for the energy storage system (200) as a fire suppression measure corresponding to the determined fire level;
wherein determining a fire level comprises:
determining (S310) the fire level as a first level when the smoke is detected in only one of the plurality of smoke sensors (210), and
determining (S310) the fire level as a second level when the smoke is detected in several smoke sensors (210) among the plurality of smoke sensors (210);
wherein the fire controlling step (S300) comprises introducing a fire extinguishing fluid provided in the watering unit (300) into a pipeline (PL), which is arranged to connect the watering unit (300) to each battery module included in the energy storage system (200) and is equipped with a bulb that is capable of being destroyed according to a temperature of the corresponding battery module, by operating (S350) the watering unit (300), when the fire level is determined as the second level; and
**characterized in** determining (S360) a water level of the fire extinguishing fluid provided in the watering unit (300) and operating (S370) the ventilation unit (250) to ventilate the energy storage system (200) with an external air when the determined water level is equal to or lower than a preset critical water level.

8. The fire monitoring method according to claim 7, further comprising:
in parallel to the smoke detection signal receiving step (S100), a ventilation controlling step (S400) of receiving a measured gas concentration from a gas sensor (220) provided in the energy storage system (200), and controlling the operation of the air conditioning unit (230) and the ventilation unit (250) according to a result of comparing the measured gas concentration with a preset critical concentration.

## Patentansprüche

1. Feuerüberwachungsvorrichtung (100) zum Überwachen eines Feuers in einem Energiespeichersystem (200), welches mit einer Mehrzahl von Batteriemodulen, einer Mehrzahl von Rauchsensoren (210), einer Klimatisierungseinheit (230), einer Feuerlöscheinheit (240), einer Bewässerungseinheit (300) und einer Belüftungseinheit (250) ausgestattet ist, wobei die Feuerüberwachungsvorrichtung umfasst:
eine Feuerniveaubestimmungseinheit (110), welche dazu eingerichtet ist, ein Rauchdetektionssignal von den Rauchsensoren (210) zu empfangen, welche innerhalb des Energiespeichersystems (200) bereitgestellt sind, und gemäß der Anzahl von Rauchsensoren (210), welche den Rauch detektieren, ein Feuerniveau zu bestimmen; und
eine Steuereinheit (120), welche dazu eingerichtet ist, entsprechend dem bestimmten Feuerniveau als eine Feuerbekämpfungsmaßnahme einen Betrieb wenigstens eines aus der Klimatisierungseinheit (230), der Feuerlöscheinheit (240), der Bewässerungseinheit (300) und der Belüftungseinheit (250) für das Energiespeichersystem (200) zu steuern;
wobei die Feuerniveaubestimmungseinheit (110) eingerichtet ist, zum:
Bestimmen des Feuerniveaus als ein erstes Niveau, wenn der Rauch in nur einem der Mehrzahl von Rauchsensoren (210) detektiert worden ist, und
Bestimmen des Feuerniveaus als ein zweites Niveau, wenn der Rauch unter der Mehrzahl von Rauchsensoren (210) in mehreren Rauchsensoren (210) detektiert worden ist;
wobei die Steuereinheit (120) dazu eingerichtet ist, ein Feuerlöschfluid, welches in der Bewässerungseinheit (300) bereitgestellt ist, in eine Rohrleitung (PL) einzuleiten, welche derart angeordnet ist, dass sie die Bewässerungseinheit (300) mit jedem Batteriemodul verbindet, welches in dem Energiespeichersystem (200) umfasst ist, und mit einer Blase ausgestattet ist, welche gemäß einer Temperatur des entsprechenden Batteriemoduls durch ein Betätigen der Bewässerungseinheit (300) zerstört werden kann, wenn das Feuerniveau als das zweite Niveau bestimmt worden ist; und
**dadurch gekennzeichnet, dass** die Steuereinheit (120) dazu eingerichtet ist, ein Wasserniveau des Feuerlöschfluids zu bestimmen, welches in der Bewässerungseinheit (300) bereitgestellt ist, und die Belüftungseinheit (250) zu betreiben, um das Energiespeichersystem (200) mit einer externen Luft zu belüften, wenn das bestimmte Wasserniveau gleich wie oder niedriger als ein voreingestelltes kritisches Wasserniveau ist.

2. Feuerüberwachungsvorrichtung (100) nach Anspruch 1,
wobei die Steuereinheit (120) dazu eingerichtet ist, den Betrieb der Klimatisierungseinheit (230) zu stoppen, welche innerhalb des Energiespeichersystems (200) bereitgestellt ist, wenn das Feuerniveau als das erste Niveau oder das zweite Niveau bestimmt worden ist.

3. Feuerüberwachungsvorrichtung (100) nach Anspruch 1,
wobei, wenn das Feuerniveau als das zweite Niveau bestimmt worden ist, die Steuereinheit (120) dazu eingerichtet ist, die Feuerlöscheinheit (240) zu betreiben, welche innerhalb des Energiespeichersystems (200) bereitgestellt ist, so dass ein Feuerlöschmittel, welches innerhalb der Feuerlöscheinheit (240) enthalten ist, in das Energiespeichersystem (200) injiziert wird.

4. Feuerüberwachungsvorrichtung nach Anspruch 1,
wobei die Steuereinheit (120) dazu eingerichtet ist, durch die Bewässerungseinheit (300) das Feuerlöschfluid in die Rohrleitung (PL) einzuleiten und unter der Mehrzahl von Batteriemodulen in ein Batteriemodul einzuleiten, bei welchem die Blase der entsprechenden Rohrleitung (PL) zerstört worden ist.

5. Feuerüberwachungsvorrichtung nach Anspruch 1,
wobei die Steuereinheit (120) dazu eingerichtet ist, von einem Gassensor (220), welcher in dem Energiespeichersystem (200) bereitgestellt ist, eine gemessene Gaskonzentration zu empfangen, den Betrieb der Klimatisierungseinheit (230) zu stoppen, welche innerhalb des Energiespeichersystems (200) bereitgestellt ist, wenn die gemessene Gaskonzentration gleich wie oder größer als eine voreingestellte kritische Konzentration ist, und die Belüftungseinheit (250) zu betreiben, um das Energiespeichersystem (200) mit einer externen Luft zu belüften.

6. Feuerüberwachungssystem, umfassend die Feuerüberwachungsvorrichtung nach einem der Ansprüche 1 bis 5 und ein Energiespeichersystem (200).

7. Feuerüberwachungsverfahren zum Überwachen eines Feuers in einem Energiespeichersystem (200), welches mit einer Mehrzahl von Batteriemodulen, einer Mehrzahl von Rauchsensoren (210), einer Klimatisierungseinheit (230), einer Feuerlöscheinheit (240), einer Bewässerungseinheit (300) und einer Belüftungseinheit (250) ausgestattet ist, wobei das Feuerüberwachungsverfahren umfasst:
einen Rauchdetektionssignalempfangsschritt (S100) eines Empfangens eines Rauchdetektionssignals von den Rauchsensoren (210), welche innerhalb des Energiespeichersystems (200) bereitgestellt sind:
einen Feuerniveaubestimmungsschritt (S200) eines Bestimmens eines Feuerniveaus gemäß der Anzahl von Rauchsensoren (210), welche den Rauch detektieren, wenn der Rauch detektiert worden ist; und
einen Feuersteuerschritt (S300) eines Steuerns eines Betriebs wenigstens eines aus der Klimatisierungseinheit (230), der Feuerlöscheinheit (240), der Bewässerungseinheit (300) und der Belüftungseinheit (250) für das Energiespeichersystem (200) als eine Feuerbekämpfungsmaßnahme entsprechend dem bestimmten Feuerniveau;
wobei das Bestimmen eines Feuerniveaus umfasst:
Bestimmen (S310) des Feuerniveaus als ein erstes Niveau, wenn der Rauch in nur einem der Mehrzahl von Rauchsensoren (210) detektiert worden ist, und
Bestimmen (S310) des Feuerniveaus als ein zweites Niveau, wenn der Rauch unter der Mehrzahl von Rauchsensoren (210) in mehreren Rauchsensoren (210) detektiert worden ist;
wobei der Feuersteuerschritt (S300) ein Einleiten eines Feuerlöschfluids, welches in der Bewässerungseinheit (300) bereitgestellt ist, in eine Rohrleitung (PL) umfasst, welche derart angeordnet ist, dass sie die Bewässerungseinheit (300) mit jedem Batteriemodul verbindet, welches in dem Energiespeichersystem (200) umfasst ist, und mit einer Blase ausgestattet ist, welche gemäß einer Temperatur des entsprechenden Batteriemoduls durch ein Betreiben (S350) der Bewässerungseinheit (300) zerstört werden kann, wenn das Feuerniveau als das zweite Niveau bestimmt worden ist; und
**gekennzeichnet durch** ein Bestimmen (S360) eines Wasserniveaus des Feuerlöschfluids, welches in der Bewässerungseinheit (300) bereitgestellt ist, und ein Betreiben (S370) der Belüftungseinheit (250), um das Energiespeichersystem (200) mit einer externen Luft zu belüften, wenn das bestimmte Wasserniveau gleich wie oder niedriger als ein voreingestelltes kritisches Wasserniveau ist.

8. Feuerüberwachungsverfahren nach Anspruch 7, ferner umfassend:
parallel zu dem Rauchdetektionssignalempfangsschritt (S100), einen Belüftungssteuerschritt (S400) eines Empfangens einer gemessenen Gaskonzentration von einem Gassensor (220), welcher in dem Energiespeichersystem (200) bereitgestellt ist, und eines Steuerns des Betriebs der Klimatisierungseinheit (230) und der Belüftungseinheit (250) gemäß einem Ergebnis eines Vergleichens der gemessenen Gaskonzentration mit einer voreingestellten kritischen Konzentration.

## Revendications

1. Appareil de surveillance d'incendie (100) permettant de surveiller un incendie dans un système de stockage d'énergie (200) équipé d'une pluralité de modules de batterie, d'une pluralité de capteurs de fumée (210), d'une unité de climatisation (230), d'une unité d'extinction d'incendie (240), d'une unité d'arrosage (300) et d'une unité de ventilation (250), l'appareil de surveillance d'incendie comprenant :
une unité de détermination de niveau d'incendie (110) configurée pour recevoir un signal de détection de fumée des capteurs de fumée (210) fournis à l'intérieur du système de stockage d'énergie (200) et déterminer un niveau d'incendie en fonction du nombre de capteurs de fumée (210) qui détectent la fumée ; et
une unité de commande (120) configurée pour commander un fonctionnement d'au moins l'une de l'unité de climatisation (230), de l'unité d'extinction d'incendie (240), de l'unité d'arrosage (300) et de l'unité de ventilation (250) pour le système de stockage d'énergie (200) en tant que mesure d'extinction d'incendie correspondant au niveau d'incendie déterminé ;
dans lequel l'unité de détermination de niveau d'incendie (110) est configurée pour :
déterminer le niveau d'incendie en tant que premier niveau lorsque la fumée est détectée dans un seul capteur de fumée de la pluralité de capteurs de fumée (210), et déterminer le niveau d'incendie en tant que second niveau lorsque la fumée est détectée dans plusieurs capteurs de fumée (210) parmi la pluralité de capteurs de fumée (210) ;
dans lequel l'unité de commande (120) est configurée pour introduire un fluide d'extinction d'incendie fourni dans l'unité d'arrosage (300) dans une canalisation (PL), qui est agencée pour raccorder l'unité d'arrosage (300) à chaque module de batterie inclus dans le système de stockage d'énergie (200) et est équipée d'une ampoule qui est capable d'être détruite en fonction d'une température du module de batterie correspondant, en actionnant l'unité d'arrosage (300), lorsque le niveau d'incendie est déterminé comme étant le second niveau ; et
**caractérisé en ce que** l'unité de commande (120) est configurée pour déterminer un niveau d'eau du fluide d'extinction d'incendie fourni dans l'unité d'arrosage (300) et actionner l'unité de ventilation (250) pour ventiler le système de stockage d'énergie (200) avec un air externe lorsque le niveau d'eau déterminé est égal ou inférieur à un niveau d'eau critique prédéfini.

2. Appareil de surveillance d'incendie (100) selon la revendication 1,
dans lequel l'unité de commande (120) est configurée pour arrêter le fonctionnement de l'unité de climatisation (230) fournie à l'intérieur du système de stockage d'énergie (200) lorsque le niveau d'incendie est déterminé comme étant le premier niveau ou le second niveau.

3. Appareil de surveillance d'incendie (100) selon la revendication 1,
dans lequel lorsque le niveau d'incendie est déterminé comme étant le second niveau, l'unité de commande (120) est configurée pour actionner l'unité d'extinction d'incendie (240) fournie à l'intérieur du système de stockage d'énergie (200), de sorte qu'un agent d'extinction d'incendie contenu à l'intérieur de l'unité d'extinction d'incendie (240) soit injecté dans le système de stockage d'énergie (200).

4. Appareil de surveillance d'incendie selon la revendication 1,
dans lequel l'unité de commande (120) est configurée pour introduire le fluide d'extinction d'incendie dans la canalisation (PL) par l'unité d'arrosage (300) et pour l'introduire dans un module de batterie au niveau duquel l'ampoule de la canalisation (PL) correspondante est détruite parmi la pluralité de modules de batterie.

5. Appareil de surveillance d'incendie selon la revendication 1,
dans lequel l'unité de commande (120) est configurée pour recevoir une concentration de gaz mesurée à partir d'un capteur de gaz (220) fourni dans le système de stockage d'énergie (200), arrêter le fonctionnement de l'unité de climatisation (230) fournie à l'intérieur du système de stockage d'énergie (200) lorsque la concentration de gaz mesurée est égale ou supérieure à une concentration critique prédéfinie et actionner l'unité de ventilation (250) pour ventiler le système de stockage d'énergie (200) avec un air externe.

6. Système de surveillance d'incendie comprenant l'appareil de surveillance d'incendie selon l'une quelconque des revendications 1 à 5 et un système de stockage d'énergie (200).

7. Procédé de surveillance d'incendie permettant de surveiller un incendie dans un système de stockage d'énergie (200) équipé d'une pluralité de modules de batterie, d'une pluralité de capteurs de fumée (210), d'une unité de climatisation (230), d'une unité d'extinction d'incendie (240), d'une unité d'arrosage (300) et d'une unité de ventilation (250), le procédé de surveillance d'incendie comprenant :
une étape de réception de signal de détection de fumée (S100) consistant à recevoir un signal de détection de fumée des capteurs de fumée (210) fournis à l'intérieur du système de stockage d'énergie (200) ;
une étape de détermination de niveau d'incendie (S200) consistant à déterminer un niveau d'incendie en fonction du nombre de capteurs de fumée (210) qui détectent la fumée, lorsque la fumée est détectée ; et
une étape de lutte contre l'incendie (S300) consistant à commander un fonctionnement d'au moins l'une de l'unité de climatisation (230), de l'unité d'extinction d'incendie (240), de l'unité d'arrosage (300) et de l'unité de ventilation (250) pour le système de stockage d'énergie (200) en tant que mesure d'extinction d'incendie correspondant au niveau d'incendie déterminé ;
dans lequel la détermination d'un niveau d'incendie comprend :
la détermination (S310) du niveau d'incendie en tant que premier niveau lorsque la fumée est détectée dans un seul capteur de fumée de la pluralité de capteurs de fumée (210), et
la détermination (S310) du niveau d'incendie en tant que second niveau lorsque la fumée est détectée dans plusieurs capteurs de fumée (210) parmi la pluralité de capteurs de fumée (210) ;
dans lequel l'étape de lutte contre l'incendie (S300) comprend l'introduction d'un fluide d'extinction d'incendie fourni dans l'unité d'arrosage (300) dans une canalisation (PL), qui est agencée pour raccorder l'unité d'arrosage (300) à chaque module de batterie inclus dans le système de stockage d'énergie (200) et est équipée d'une ampoule qui est capable d'être détruite en fonction d'une température du module de batterie correspondant, en actionnant (S350) l'unité d'arrosage (300), lorsque le niveau d'incendie est déterminé comme étant le second niveau ; et
**caractérisé par** la détermination (S360) d'un niveau d'eau du fluide d'extinction d'incendie fourni dans l'unité d'arrosage (300) et le fonctionnement (S370) de l'unité de ventilation (250) pour ventiler le système de stockage d'énergie (200) avec un air externe lorsque le niveau d'eau déterminé est égal ou inférieur à un niveau d'eau critique prédéfini.

8. Procédé de surveillance d'incendie selon la revendication 7, comprenant en outre : parallèlement à l'étape de réception de signal de détection de fumée (S100), une étape de commande de ventilation (S400) consistant à recevoir une concentration de gaz mesurée à partir d'un capteur de gaz (220) fourni dans le système de stockage d'énergie (200), et de commande du fonctionnement de l'unité de climatisation (230) et de l'unité de ventilation (250) en fonction d'un résultat de comparaison de la concentration de gaz mesurée avec une concentration critique prédéfinie.
